**Europäisches Patentamt**

**European Patent Office**

**Office européen des brevets**

(19)

(11) Veröffentlichungsnummer : **0 426 960 B1**

(12)

# EUROPÄISCHE PATENTSCHRIFT

(45) Veröffentlichungstag der Patentschrift :
**30.12.92 Patentblatt 92/53**

(51) Int. Cl.$^5$ : **A01B 39/18, A01B 61/02**

(21) Anmeldenummer : **90116550.6**

(22) Anmeldetag : **29.08.90**

(54) Hackvorrichtung für ein Bodenbearbeitungsgerät.

(30) Priorität : **04.11.89 DE 8913031 U**

(43) Veröffentlichungstag der Anmeldung :
**15.05.91 Patentblatt 91/20**

(45) Bekanntmachung des Hinweises auf die
Patenterteilung :
**30.12.92 Patentblatt 92/53**

(84) Benannte Vertragsstaaten :
**DE FR NL**

(56) Entgegenhaltungen :
**BE-A- 435 738**
**DE-A- 3 521 785**
**DE-C- 246 223**

(56) Entgegenhaltungen :
**DE-C- 897 496**
**FR-A- 635 279**
**NL-C- 66 789**
**NL-C- 69 688**
**US-A- 2 644 387**
**US-A- 2 674 170**

(73) Patentinhaber : **Rabewerk GmbH + Co.**
**W-4515 Bad Essen (DE)**

(72) Erfinder : **Bohnenkamp, Wilfried, Dipl.-Ing.**
**Klusring 25**
**W-4515 Bad Essen (DE)**

(74) Vertreter : **Missling, Arne, Dipl.-Ing.**
**Patentanwalt Bismarckstrasse 43**
**W-6300 Giessen (DE)**

EP 0 426 960 B1

## Beschreibung

Die Erfindung bezieht sich auf eine Hackvorrichtung für ein Bodenbearbeitungsgerät mit zumindest einem Hackschar, welches an einem Träger befestigt ist, welcher an seinem vorderen Ende mit einem Stützrad versehen ist, wobei der Träger schwenkbar an einem im wesentlichen vertikalen Stiel gelagert ist, welcher höhenverschiebbar an einem Rahmen des Bodenbearbeitungsgerätes geführt ist.

Die Erfindung geht von einem Stand der Technik aus, wie er durch die DE-A 35 21 785 oder DE-C 24 62 23 bekannt geworden ist.

Bei der Ausgestaltung von Hackvorrichtungen ist zu berücksichtigen, daß diese dazu dienen, die Wurzeln von Unkraut u.ä. Bewuchs in der Erde in einer geringen Tiefe durchzutrennen bzw. zu lockern, so daß nachfolgende Striegelzinken das Unkraut an die Erdoberfläche ziehen und dafür sorgen, daß ein Wiederanwachsen verhindert wird. Aus diesem Grunde weist ein Hackvorsatz üblicherweise ein Stützrad auf, mit Hilfe dessen die Hackschare den Bodenkonturen folgen können.

Wie bereits in der DE-A 35 21 785 beschrieben, muß eine Hackvorrichtung so ausgebildet sein, daß diese beim Auftreffen auf Bodenunebenheiten, bedingt durch die Tastwirkung des Stützrades, in im wesentlichen vertikaler Richtung bewegbar ist. Diese Bewegbarkeit ist bei der aus der DE-A 35 21 785 bekannten Vorrichtung durch die Lagerung des Hackschars an einem Parallelogrammgestänge ermöglicht.

Der Erfindung liegt die Aufgabe zugrunde, eine Hackvorrichtung der eingangs genannten Art zu schaffen, welche bei einfachem Aufbau und betriebssicherer Wirkungsweise nicht nur eine Höhenveränderbarkeit aufweist, sondern auch zur Vermeidung von Beschädigungen Bodenhindernissen ausweichen kann.

Erfindungsgemäß wird die Aufgabe dadurch gelöst, daß der Träger in einem Bereich zwischen dem Stützrad und dem Hackschar unmittelbar und frei beweglich an dem Stiel gelagert ist, und daß der Stiel in vertikaler Richtung frei beweglich an dem Rahmen geführt ist.

Die erfindungsgemäße Hackvorrichtung zeichnet sich durch eine Reihe erheblicher Vorteile aus. Da erfindungsgemäß die Bewegbarkeit der Hackschar so ausgebildet ist, daß diese zusammen mit dem Träger und mit dem Stützrad verschwenkbar an einem Träger gelagert ist, kann eine Verkippung oder Verschwenkung der Hackschar unabhängig von einer Vertikalbewegung, d.h. einer Höhenveränderung erfolgen. Da die Höhenveränderungen durch die Lagerung des Stiels an dem Rahmen ermöglicht werden, kann die Länge des Stiels in großem Maße variiert werden, um eine ausreichende Bodenfreiheit zwischen dem Rahmen und der Ackerbodenoberfläche zu schaffen. Der Abstand des Rahmens vom Boden wirkt sich dabei praktisch nicht auf die Verschwenkbarkeit der Hackschar aus, so daß insgesamt bewegungsbahnen der Hackscharen realisierbar sind, welche zum einen eine sichere Abstützung des Trägers auf dem Stützrad auch im verschwenkten Zustand gewährleisten und zugleich übermäßige Bewegungen des Hackschares in Arbeitsrichtung des Bodenbearbeitungsgerätes vermeiden. Dies führt dazu, daß die Gefahr, daß sich die Hackschare an Bodenhindernissen verhaken, praktisch vollständig auszuschließen ist.

Die erfindungsgemäße Hackvorrichtung ist somit insbesondere als Pflegegerät für wachsende Reihenkulturen, beispielsweise für schnell wachsenden Mais besonders gut geeignet, daß eine ausreichende Rahmenhöhe vorgesehen sein kann, welche eine Verletzung oder Beschädigung der Pflanzen vermeidet. Es wird erfindungsgemäß eine freie Durchgangshöhe geschaffen, welche praktisch beliebig den jeweiligen Anforderungen angepaßt werden kann.

In einer besonders vorteilhaften Ausgestaltung der Erfindung ist vorgesehen, daß der Träger in einem Bereich zwischen dem Stützrad und dem Hackschar an dem Stiel gelagert ist. Es ergeben sich somit bevorzugterweise günstige Gewichtsverhältnisse, welche so beeinflußbar sind, daß sowohl eine vorgegebene Aufstützkraft für das Stützrad als auch eine ausreichende Andrückkraft für die Hackschare gewährleistet ist.

In einer weiteren, besonders vorteilhaften Ausgestaltung der Erfindung ist vorgesehen, daß der Träger am unteren Endbereich des Stieles gelagert ist. Diese Ausgestaltung führt zu einer besonders günstigen Anordnung des ideellen Pols, um welchen das Hackschar bewegbar ist. Da der Gelenkpunkt am unteren Endbereich des Stieles vorgesehen ist, weicht das Hackschar genügend nach hinten und gleichzeitig nach oben aus, wenn es auf Hindernisse, beispielsweise Steine auftrifft. Insgesamt ist erfindungsgemäß die Pollage in der Ausgangsposition sehr tief gewählt, wobei der Pol entsprechend der Aufwärtsbewegung der Spitze des Hackschars aufwärts wandert. Dabei verbleiben stets günstige Kraftverhältnisse relativ zu dem ideellen Pol. Ein weiterer Vorteil der erfindungsgemäßen Vorrichtung besteht darin, daß die Bahn, welche die Hackschar-Spitze beschreibt, relativ gerade ist und sich die Situation für die Scharspitze während der Schwenkbewegung nicht sehr ändert. Dies führt zu dem Ergebnis, daß der Widerstand gegen die Schwenkbewegung der Hackschar bei zunehmender Verschwenkung nicht wesentlich größer wird, so daß die Gefahr eines Verhakens relativ klein ist. Dabei bleibt erfindungsgemäß die Neigung der Bahn der Hackschar-Spitze fast gleich.

In einer weiteren, besonders vorteilhaften Ausgestaltung der Erfindung ist das Hackschar mittels eines ersten Federelements nach unten vorgespannt. Durch die Vorspannung wird gewährleistet, daß das Hackschar sich stets in einer ausreichenden Bodentiefe befindet und nach einem Ausweichen beim Auftreffen auf ein Hindernis in seine Arbeitslage zurückbewegt wird. Das Hackschar ist damit mittels eines ersten Federelements vorgespannt, welches bevorzugterweise zwischen dem Träger und dem Stiel angeordnet ist.

Weiterhin ist es besonders günstig, wenn im Bereich zwischen dem Träger und dem Stiel ein die Schwenkbarkeit des Trägers grenzender Anschlag vorgesehen ist, welcher verhindert, daß die Hackschar um einen zu großen Schwenkwinkel nach unten verschwenkt werden und somit zu weit in das Erdreich eindringen kann. Im Hinblick auf die Tiefenanordnung des Schwenkgelenks ist es günstig, den Anschlag in diesem Bereich, d.h. nahe dem Schwenkgelenk vorzusehen.

Um die Höhenveränderungen der Hackvorrichtung, welche zur Anpassung an Bodenunebenheiten erforderlich sind, einfach ausführen zu können, und um hierbei Verklemmungen o.ä. zu vermeiden, ist vorgesehen, daß der Stiel mittels einer reibungsarmen Lagereinrichtung an dem Rahmen gelagert ist. Die Lagereinrichtung kann beispielsweise in Form von Rollenlagern o.ä. ausgebildet sein. Zur Unterstützung der Bewegung der Hackvorrichtung, insbesondere zur Unterstützung einer Rückbewegung nach einer Verschiebung nach oben ist ein zweites Federelement vorgesehen, welches den Stiel nach unten vorspannt und welches im Bereich des Rahmens angeordnet sein kann.

Die erfindungsgemäße Hackvorrichtung kann bevorzugterweise auch mehrere Hackschare umfassen, welche beispielsweise in bekannter Weise seitlich zueinander versetzt sind und gemeinsam einen Bodenstreifen zu bearbeiten. Um hierbei die Einstellung des Hackschars zu vereinfachen und an das Stützrad anzupassen, ist vorgesehen, daß das Hackschar mittels eines eigenen Stiels höheneinstellbar am Träger befestigt ist.

Um die Pflege von Reihenkulturen mittels der erfindungsgemäßen Hackvorrichtung zu erleichtern, können seitliche Abschirmplatten vorgesehen sein, welche entweder seitlich jedes Hackschars oder seitlich zur Begrenzung einer Anordnung mehrerer Hackschare angebracht sind. Um eine Anpassung an Bodenunebenheiten zu ermöglichen, sind die Abschirmplatten bevorzugterweise höhenveränderbar gelagert, beispielsweise mittels Parallelogrammgestängen.

Im folgenden wird die Erfindung anhand von Ausführungsbeispielen in Verbindung mit der Zeichnung beschrieben. Dabei zeigt:

Fig. 1 eine schematische Seitenansicht eines ersten Ausführungsbeispiels der erfindungsgemäßen Hackvorrichtung,

Fig. 2 eine Draufsicht auf das in Fig. 1 gezeigte Ausführungsbeispiel,

Fig. 3 eine Draufsicht auf ein weiteres Ausführungsbeispiel, und

Fig. 4 eine Seitenansicht eines Ausführungsbeispiels nach Fig. 1 an einem Hinderniss..

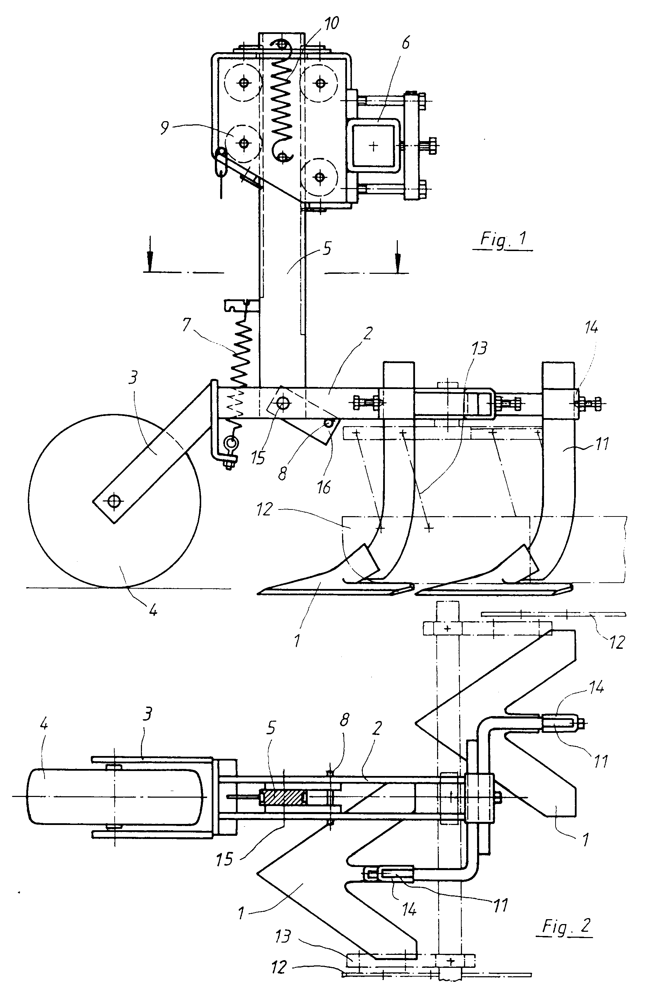

Die erfindungsgemäße Hackvorrichtung, welche in Fig. 1 dargestellt ist, umfaßt zwei Hackschare 1, welche jeweils an einem Stiel 11 befestigt sind, der sich nach oben erstreckt und mittels einer Spanneinrichtung 14 höhenverstellbar an einem Träger 2 gelagert ist. Die Spanneinrichtung 14 umfaßt eine Tasche und eine Feststellschraube.

Der Träger 2, welcher bei dem gezeigten Ausführungsbeispiel in Form zweier zueinander paralleler Streben ausgebildet ist, ist an einem Gelenk 15 am unteren Ende des Stiels 5 schwenkbar gelagert. Der vordere Endbereich 3 des Trägers 2 lagert ein Stützrad 4, welches auf dem Ackerboden abrollt.

Weiterhin ist am unteren Ende des Stiels 5 ein Arm 16 befestigt, an dessen einem Ende ein Anschlag 8 angebracht ist, welcher eine nach unten gerichtete Schwenkbewegung der Hackschare begrenzt.

Weiterhin ist zwischen dem Stiel 5 und dem Träger 2 ein erstes Federelement 7 angeordnet, welches die Hackschare gegen den Erdboden vorspannt.

Der obere Bereich des Stiels 5 ist mittels eine reibungsarmen Lagereinrichtung 9, welche mehrere Führungsrollen umfaßt, an einem Rahmen 6 gelagert. Der Stiel 5 ist an seinem oberen Endbereich vertikal angeordnet und geradlinig ausgebildet, so daß der Träger 2 zusammen mit dem Stiel 5 vertikal bewegbar ist, um Anpassungen an Bodenunebenheiten vornehmen zu können. Dabei wird die Verschwenkbarkeit des Trägers relativ zu dem Stiel nicht beeinträchtigt.

In den Fig. 1 und 2 sind gestrichelt seitliche Abschirmplatten 12 dargestellt, welche jeweils über ein Parallelogrammgestänge 13 höhenveränderbar an dem Träger 2 gelagert sind.

Um sicherzustellen, daß der Stiel 5 zusammen mit dem Träger 2 und den Hackscharen 1 nach einer Aufwärtsbewegung wieder in die Ausgangslage zurückkehrt, ist im Bereich des oberen Endes des Stiels 5 ein zweites Federelement 10 angeordnet, welches den Stiel 5 nach unten vorspannt.

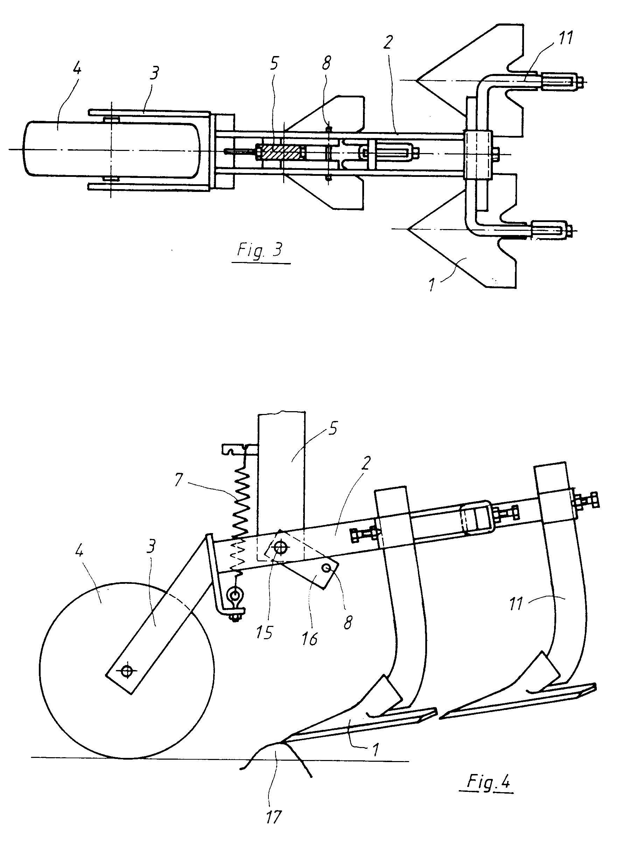

In Fig. 3 ist in der Draufsicht ein weiteres Ausführungsbeispiel gezeigt, bei welchem insgesamt drei Hackscharen vorgesehen sind, welche sowohl seitlich als auch in Fahrtrichtung der Hackvorrichtung versetzt angeordnet sind.

Die Fig. 4 zeigt einen Betriebszustand, bei welchem das vordere Hackschar 1 auf einen Stein 17 aufgetroffen und diesem dadurch ausgewichen ist, daß der Träger 2 um das Gelenk 15 verschwenkt wurde, während sich insgesamt die Hackvorrichtung weiterhin auf dem Stützrad 4 abstützt und dadurch dem Schar einen besonders günstigen Bewegungsverlauf verleiht.

**Patentansprüche**

1. Hackvorrichtung für ein Bodenbearbeitungsgerät mit zumindest einem Hackschar (1), welches an einem Träger (2) befestigt ist, welcher an seinem vorderen Ende (3) mit einem Stützrad (4) versehen ist, wobei der Träger (2) schwenkbar an einem im wesentlichen vertikalen Stiel (5) gelagert ist, welcher höhenverschiebbar an einem Rahmen (6) des Bodenbearbeitungsgerätes geführt ist, dadurch gekenenzeichnet, daß der Träger (2) in einem Bereich zwischen dem Stützrad (4) und dem Hackschar (1) unmittelbar und frei beweglich an dem Stiel (5) gelagert ist und daß der Stiel (5) in vertikaler Richtung frei beweglich an dem Rahmen (6) geführt ist.

2. Vorrichtung nach Anspruch 1, dadurch gekennzeichnet, daß der Träger (2) am unteren Endbereich des Stiels (5) gelagert ist.

3. Vorrichtung nach Anspruch 1 oder 2, dadurch gekennzeichnet, daß das Hackschar (1) mittels eines ersten Federelementes (7) nach unten vorgespannt ist.

4. Vorrichtung nach Anspruch 3, dadurch gekennzeichnet, daß das erste Federelement (7) zwischen dem Träger (2) und dem Stiel (5) angeordnet ist.

5. Vorrichtung nach einem der Ansprüche 1 bis 4, dadurch gekennzeichnet, daß im Bereich zwischen dem Träger (2) und dem Stiel (5) ein die Schwenkbarkeit des Trägers (2) begrenzender Anschlag (8) angeordnet ist.

6. Vorrichtung nach einem der Ansprüche 1 bis 5, dadurch gekennzeichnet, daß der Stiel (5) mittels einer reibungsarmen Lagereinrichtung (9) an dem Rahmen (6) gelagert ist.

7. Vorrichtung nach einem der Ansprüche 1 bis 6, dadurch gekennzeichnet, daß der Stiel (5) mittels eines zweiten Federelementes (10) nach unten vorgespannt ist.

8. Vorrichtung nach einem der Ansprüche 1 bis 7, dadurch gekennzeichnet, daß mehrere Hackschare (1) vorgesehen sind.

9. Vorrichtung nach einem der Ansprüche 1 bis 8, dadurch gekennzeichnet, daß das Hackschar (1) mittels eines Grindels (11) höhenverstellbar am Träger (2) befestigt ist.

10. Vorrichtung nach einem der Ansprüche 1 bis 9, dadurch gekennzeichnet, daß seitlich des Hackschares (1) Abschirmplatten (12) angeordnet sind.

11. Vorrichtung nach Anspruch 10, dadurch gekennzeichnet, daß die Abschirmplatte (12) mittels eines Parallelogrammgestänges (13) höhenveränderbar ist.

12. Vorrichtung nach einem der Ansprüche 1 bis 11, dadurch gekennzeichnet, daß dem Hackschar (1) zumindest ein Striegel nachgeordnet ist.

**Claims**

1. A hoeing device for an agricultural implement, having at least one hoe share (1) secured to a bearing member (2) having a supporting wheel (4) at its front end (3), the bearing member (2) being pivotably mounted on a substantially vertical leg (5) guided in a vertically displaceable manner on a frame (6) of the agricultural implement, characterized in that the bearing member (2) is - in a region between the supporting wheel (4) and the hoe share (1) - mounted on the leg (5) in a direct and freely movable manner and in that the leg (5) is guided on the frame (6) so as to be freely movable in a vertical direction.

2. A device in accordance with Claim 1, characterized in that the bearing member (2) is mounted on the lower end-region of the leg (5).

3. A device in accordance with Claim 1 or 2, characterized in that the hoe share (1) is pretensioned downwards by means of a first spring element (7).

4. A device in accordance with Claim 3, characterized in that the first spring element (7) is arranged between the bearing member (2) and the leg (5).

5. A device in accordance with any one of Claims 1 to 4, characterized in that a stop (8) limiting the pivoting of the bearing member (2) is arranged in the region between the bearing member (2) and the leg (5).

6. A device in accordance with any one of Claims 1 to 5, characterized in that the leg (5) is mounted on the frame (6) by means of a low-friction bearings device (9).

7. A device in accordance with any one of Claims 1 to 6, characterized in that the leg (5) is pretensioned downwards by means of a second spring element (10).

8. A device in accordance with any one of Claims 1 to 7, characterized in that a plurality of hoe shares (1) are provided.

9. A device in accordance with any one of Claims 1 to 8, characterized in that the hoe share (1) is secured to the bearing member (2) in a vertically adjustable manner by means of a plough beam (11).

10. A device in accordance with any one of Claim 1 to 9, characterized in that shielding plates (12) are arranged to the side of the hoe share (1).

11. A device in accordance with Claim 10, characterized in that the shielding plate (12) is vertically adjustable by means of a parallelogram linkage (13).

12. A device in accordance with any one of Claims 1 to 11, characterized in that at least one flexible harrow is arranged behind the hoe share (1).

**Revendications**

1. Dispositif de binage pour un engin de culture, comportant au moins un soc de binage (1) fixé à un support (2) équipé à son extrêmité avant (3) d'une roue d'appui (4), le support (2) étant monté oscillant sur un montant (5) essentiellement vertical, qui est guidé sur un châssis (6) de l'engin de culture avec possibilité de déplacement en hauteur,

caractérisé en ce que le support (2) est monté directement, et en pouvant se déplacer librement, sur le montant (5), dans une zone située entre la roue d'appui (4) et le soc de binage (1), et en ce que le montant (5) peut se déplacer librement dans la direction verticale, guidé sur le cadre (6).

2. Dispositif suivant la revendication 1, caractérisé en ce que le support (2) est monté sur la partie d'extrémité inférieure du montant (5).

3. Dispositif suivant la revendication 1 ou la revendication 2, caractérisé en ce que le soc de binage (1) est soumis à une pré-contrainte vers le bas au moyen d'un premier organe formant ressort (7).

4. Dispositif suivant la revendication 3, caractérisé en ce que le premier organe formant ressort (7) est disposé entre le support (2) et le montant (5).

5. Dispositif suivant l'une quelconque des revendications 1 à 4, caractérisé en ce que, dans la zone entre le support (2) et le montant (5), est disposée une butée (8) limitant le pivotement du support (2).

6. Dispositif suivant l'une quelconque des revendications 1 à 5, caractérisé en ce que le montant (5) est monté sur le cadre (6) au moyen d'un dispositif formant palier (9) à faible frottement.

7. Dispositif suivant l'une quelconque des revendications 1 à 6, caractérisé en ce que le montant (5) est soumis à une pré-contrainte vers le bas au moyen d'un deuxième organe formant ressort (10).

8. Dispositif suivant l'une quelconque des revendications 1 à 7, caractérisé en ce que plusieurs socs de binage (1) sont prévus.

9. Dispositif suivant l'une quelconque des revendications 1 à 8, caractérisé en ce que le soc de binage (1) est fixé sur le support (2) avec possibilité de réglage en hauteur, au moyen d'une barre de soc (11).

10. Dispositif suivant l'une quelconque des revendications 1 à 9, caractérisé en ce que des plaques de garde (12) sont prévues sur le côté du soc de binage (1).

11. Dispositif suivant la revendication 10, caractérisé en ce que les plaques de garde (12) sont réglables en hauteur au moyen d'une tringlerie en parallèlogramme.

12. Dispositif suivant l'une quelconque des revendications 1 à 11, caractérisé en ce qu'au moins une herse flexible est disposée après le soc de binage (1).

Fig. 1

Fig. 2

Fig. 3

Fig. 4